# EUROPEAN PATENT APPLICATION

(11) **EP 0 781 932 A1**
(43) Date of publication of application: **02.07.1997**
(21) Application number: 96117520.5
(22) Date of filing: 31.10.1996
(51) Int. Cl.: F16C 11/08, F16C 27/06

(54) **Ball joint**

(30) Priority: 27.12.1995 JP 351266/95
(71) Applicant: MINEBEA CO., LTD., Miyota-shi, Kitasaku-gun, Nagano (JP)
(72) Inventor: Akao, Shinichi, c/o Minebea Co., Ltd., Miyota-machi, Kitasaku-gun, Nagano (JP); Maruta, Tomihiro, c/o Minebea Co., Ltd., Miyota-machi, Kitasaku-gun, Nagano (JP)
(74) Representative: Füchsle, Klaus, Dipl.-Ing.

(57) **Abstract**

A spherical rod end bearing has a body (1), a race (11) fitted in a mounting hole (3) of the body (1), a ball (15) rotatably fitted on the hemispherical inner peripheral surface (13) of the race (11) and a vibration-proof rubber-made vibration-free member (5) provided between the inner wall (4) of the mounting hole (3) and the outer peripheral surface (12) of the race (11). The rod end bearing can withstand a high radial load and a high swing load and has a long operation life.

## Description

The present invention relates to a spherical bearing, and more particularly to a rod end bearing for an anti-rolling system of a rolling stock or the like.

Many of conventional rod end bearings for use in an anti-rolling system of a rolling stock or the like have the structure wherein the outer peripheral surface of a ball is in metal-to-metal contact with the bearing surface of a race.

Recently, however, this type of rod end bearing is often used under a heavy load and is accordingly subjected to repeated loads which are directed in a radial direction and vary in a short cycle. As a result, the outer peripheral surface of the ball and the bearing surface of the race wear or are fatigued in a short time, making the life of the rod end bearing short.

In particular, when a swing load is applied at a small cycle together with the load of the radial direction, the fatigue or the wear increases, making the life of the rod end bearing shorter.

The object of the present invention is to provide a long-life spherical bearing having high resistance to a radial load and vibration.

In order to achieve the object, the present invention provides a spherical bearing which comprises a body, a race fitted in a mounting hole formed in the body, a ball which is rotatably and slidably fitted to the partially spherical inner peripheral surface of the race, and a substantially ring-shaped vibration-proof member made of vibration-proof rubber and provided between the inner wall of the mounting hole of the body and the outer peripheral surface of the race.

The load exerted in the radial direction between the ball and the body is attenuated owing to the extension and contraction of the elastic vibration-proof member, and the load due to swing is transmitted from the ball to the vibration-proof member through the race. In this case, the ball does not directly contact with the vibration-proof member during the swing of the ball. Thus, the load applied to the vibration-proof member is smaller than the swing load applied to the ball. This enables the spherical bearing of the present invention to resist high swing operation.
Fig. 1 is a front view of the spherical bearing according to the first embodiment of the present invention;
Fig. 2 is a cross-sectional view of the spherical bearing of Fig. 1, which view includes the central axis of the body;
Fig. 3 is a lateral view of the spherical bearing shown in Fig. 1;
Fig. 4 is an axial longitudinal sectional view of the spherical bearing shown in Fig. 3;
Fig. 5 shows non-swing - oscillation fatigue characteristics of the first embodiment of the present invention and the prior art;
Fig. 6 shows non-swing - oscillation torque characteristics of the first embodiment of the present invention and the prior art;
Fig. 7 shows swing - oscillation wear characteristics of the first embodiment of the present invention and the prior art.
Fig. 8 shows swing - oscillation torque characteristics of the first embodiment of the present invention and the prior art;
Fig. 9 is a cross-sectional view of the spherical bearing according to the second embodiment of the present invention, which view includes the central axis of the body; and
Fig. 10 is an axial sectional view of the spherical bearing according to the second embodiment of the present invention.

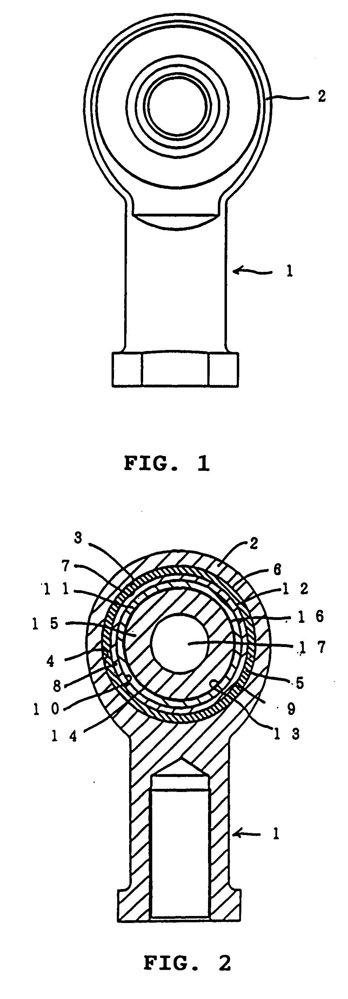

Figs. 1 to 4 respectively show a front view of the spherical bearing, a cross-sectional view of the spherical bearing which view includes the central axis, a lateral view of the spherical bearing, and a longitudinal sectional view of the spherical bearing which view includes the central axis, all according to the first embodiment.

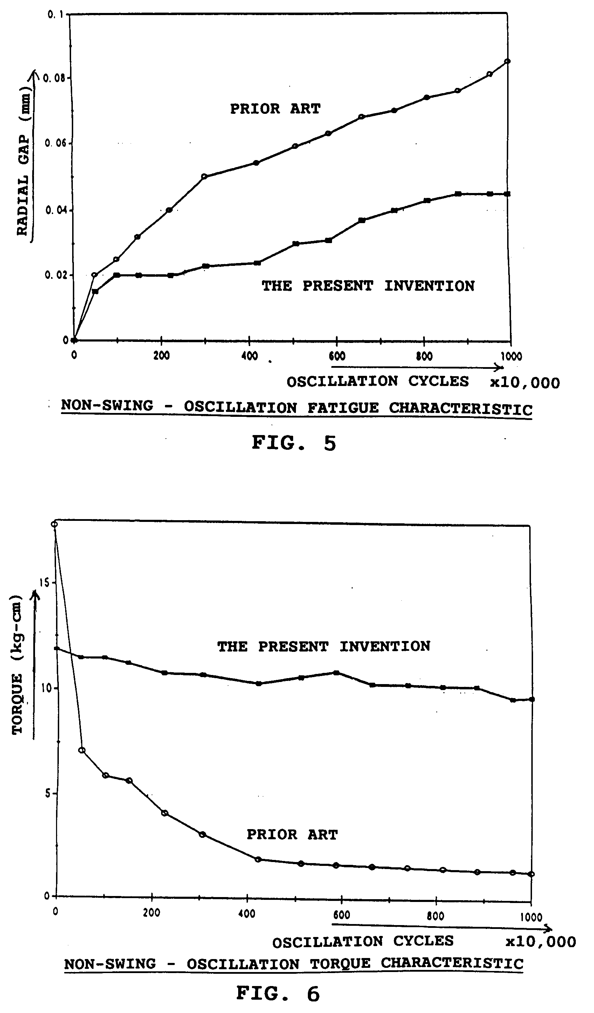

Figs. 5 to 8 respectively show a non-swing - oscillation fatigue characteristic of the first embodiment, a non-swing - oscillation torque characteristic, a swing - oscillation wear characteristic and a swing - oscillation torque characteristic, according to the first embodiment.

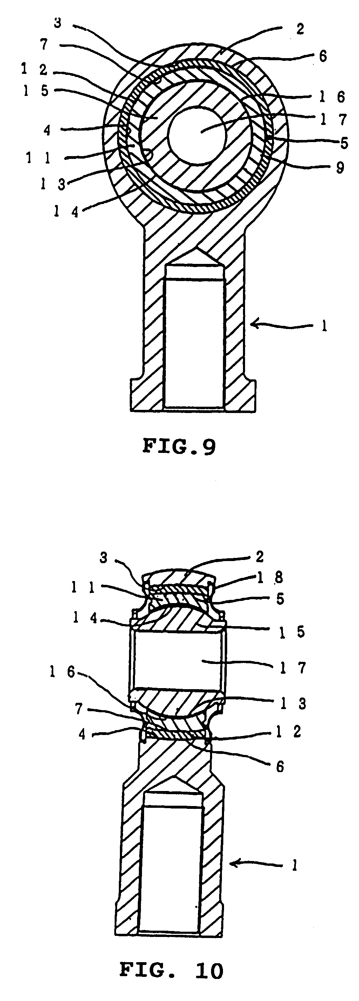

Moreover, Fig. 9 is a cross-sectional view of the spherical bearing of the second embodiment, which view includes the central axis of the body, and Fig. 10 .is a longitudinal sectional view of the spherical bearing of the second embodiment which view includes the central axis of the body.

The spherical bearing of the present invention will be described by way of a first embodiment and a second embodiment with reference to Figs. 1 to 8 and Figs. 9 and 10, respectively. In these cases, rod end bearings according to these embodiments are used for rolling stocks. However, the embodiments are applicable to other spherical bearings.

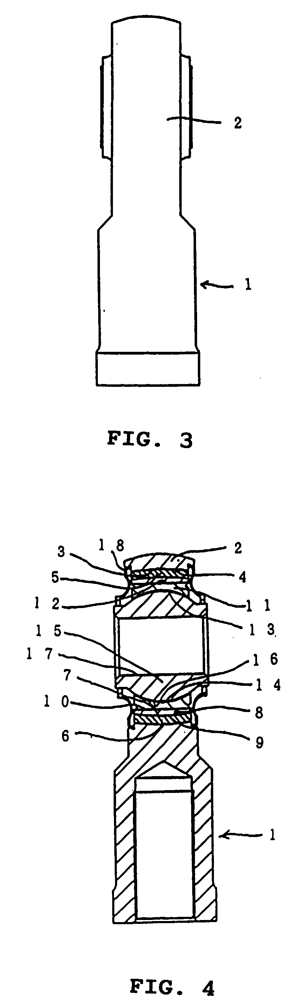

As shown in Figs. 1 to 4 of the first embodiment of the present invention, the rod end bearing includes a body 1 which has a mounting hole 3 formed in an end portion 2 thereof. The mounting hole 3 is circular in cross section as shown in Fig. 2 and has an inner wall 4 which is concave and arcuate in longitudinal section as shown in Fig. 4.

A barrel-shaped vibration-proof member 5 is received in the mounting hole 3. The vibration-proof member 5 has the outer peripheral surface 6 having the same shape and size as those of the inner wall 4 of the mounting hole 3. The outer peripheral surface 6 is fixed to the inter wall 4 of the mounting hole 3. Moreover, the vibration-proof member 5 has an inner peripheral surface 7 which is concave and arcuate in axial longitudinal cross section.

A barrel-shaped sleeve 8 is received in the vibration-proof member 5. The outer peripheral surface 9 of the sleeve 8 is formed convex in longitudinal section and has the same shape and size as the inner peripheral surface 7 of the vibration-proof member 5. The outer peripheral surface 9 is fixed to the inner peripheral surface 7 of the vibration-proof member 5. The inner peripheral surface 10 of the sleeve 8 is cylindrical (Fig. 4).

A race 11 is provided in the sleeve 8 in such a way that the cylindrical outer peripheral surface 12 of the race 11 is press-fitted onto the inner peripheral surface 10 of the sleeve 8. An inner peripheral surface 13 of the race 11 is formed concave and arcuate in longitudinal cross section, and is covered with an anti-wear liner 14 which is made of polytetrafluoroethylene known as Teflon, for example.

A ball 15 is disposed in the race 11 and is formed with an outer peripheral surface 16 having substantially the same shape and size as the inner peripheral surface 13 of the race 11. The outer peripheral surface 16 of the ball 15 rotatably and slidably contacts the inner peripheral surface 13 of the race 11. Moreover, the ball 15 has a connecting center hole 17 for connecting a connecting member to the ball 15.

A pair of seals 18 are provided on both sides of the end portion 2 of the body 1 in such a way that the seals 18 cover those outer peripheral portions of the ball 15 which form side portions of the ball 15 and also cover the mounting hole 3 of the body 1, the vibration-proof member 5, the sleeve 8 and both side portions of the race 11.

It is preferred that the vibration-proof member 5 be made of vibration-proof rubber, and in particular, vibration-proof rubber of hydrogenated NBR series.

The rod end bearing of the first embodiment includes a first sub-assembly and a second sub-assembly. The first sub-assembly comprises the body 1, the vibration-proof member 5 and the sleeve 8, and the a second sub-assembly comprises the ball 15 and the race 11. Both sub-assemblies are independently manufactured in advance.

The vibration-proof member 5 is formed by molding the aforementioned vibration-proof rubber between the inner wall 4 of the mounting hole 3 of the body 1 and the outer peripheral surface 9 of the sleeve 8 in the first sub-assembly.

The race 11 of the second sub-assembly is press-fitted onto the inner peripheral surface 13 of the sleeve 8 of the first sub-assembly thus formed, whereby assembling of the rod end bearing is completed.

The reason why the sleeve 8 is used in the first embodiment will now be described.

In the first embodiment, if the vibration-proof member 5 were to be formed between the body 1 and the race 1 by molding, the anti-wear liner made of polytetrafluoroethylene might peel off from the inner peripheral surface 13 of the race 11 due to high-temperature heat during the molding process.

When, however, the vibration-proof member 5 is formed beforehand between the body 1 and the sleeve 8 and then the race 11 is press-fitted in the sleeve 8, the above-mentioned disadvantage caused by the high-temperature heat generated during the molding process can be avoided completely.

Shown in Figs. 5 to 8 are the comparative results of experiments made on the rod end bearings of both the embodiment of the present invention and the prior art.

In the rod end bearings of the embodiment of the present invention and the prior art has a diameter of 53.181mm. The rod end bearing of the embodiment of the present invention has a vibration-proof member formed by molding vibration-free rubber of hydrogenated NBR series (for example, Z-Pole (a trademark of Nippon Zeon Co., Ltd.) having a thickness of 4mm and a width of 28mm, while the rod end bearing of the prior art is not provided with a vibration-proof member.

Fig. 5 shows the non-swing - oscillation characteristics which were obtained by the experiments wherein a swing load of 2,000Kg ± 1,000kg was applied to the rod end bearing of the embodiment of the present invention and to that of the prior art at a swing speed of 30CPM, without the swing load (which is defined as the load exerted in the direction of the swing of the ball) being applied. In these characteristics, a radial gap (in other words, the amount of fatigue) generated between the outer peripheral surface of the ball and the race of the first embodiment of the present invention was always smaller, over the entire region up to 10,000,000 cycles, than that of the prior art, and was about as half as the radial gap of the prior art at 10,000,000 cycles.

Fig. 6 shows the non-swing - oscillation torque characteristic which was obtained from the experiments performed on the rod end bearing of the embodiment of the present invention and that of the prior art under the same condition as that of the experiments of Fig. 5.

In the experiments of Fig. 6, the torque in the present invention was kept substantially constant in the region up to 10,000,000 cycles. On the other hand, the torque in the prior art was reduced sharply up to 4,000,000 cycles as the cycles increased, and the torque remained nearly constant at more than 10,000,000 cycles. However, it was several times divided by ten of the torque of the embodiment of the present invention.

It is clear from Figs. 5 and 6 that, when only the radial load was applied to the rod end bearings, the vibration-proof effect of the rod end bearing according to the embodiment of the present invention was much greater than that of the prior art which did not use a vibration-proof member.

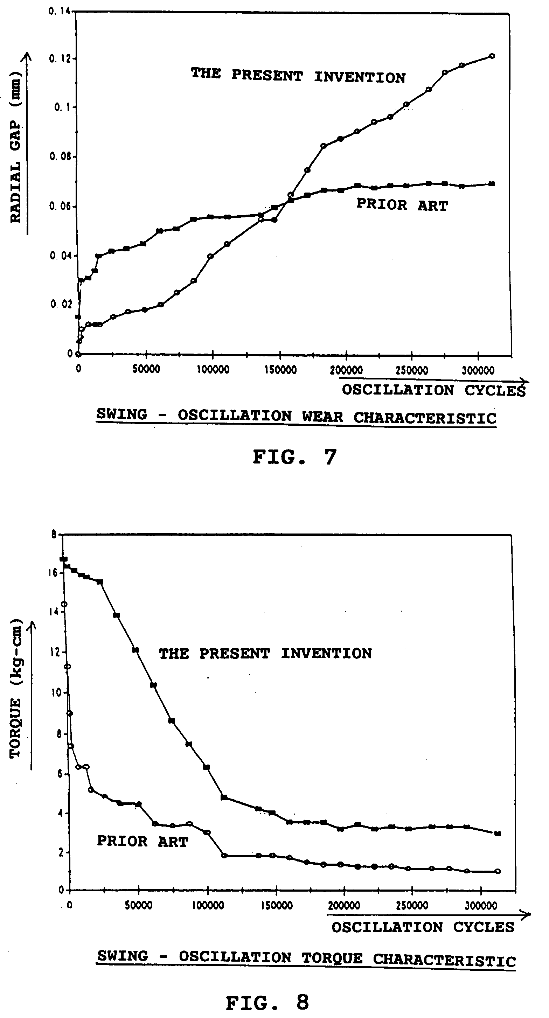

Fig. 7 shows the swing - oscillation wear characteristics which were obtained from the experiments wherein a vibration load of 2,000kg ± 500kg was applied, together with a swing load of a swing angle of ±25° , to the rod end bearing of the embodiment of the present invention and to that of the prior art in the radial direction at a vibration speed of 30CPM.

In the range up to 150,000 cycles, the swing - oscillation wear characteristic of the prior art was better than that of the embodiment of the present invention.

In a range between 150,000 cycles and 300,000 cycles, however, the swing - oscillation wear characteristic of the embodiment of the present invention was better than that of the prior art, by virtue of the elasticity of the vibration-proof member 5. At 300,000 cycles, the radial gap of the embodiment of the present invention was as half as that of the prior art, thereby enhancing vibration-proof effect extremely.

Fig. 8 shows the swing - oscillation torque characteristic which was obtained from the experiments performed on the rod end bearing of the embodiment of the present invention and that of the prior art under the same condition as that of the torque of the experiments of Fig. 7. The torque produced in the embodiment of the present invention was higher than that produced in the prior art over the entire region up to approximately 300,000 cycles. At and in the neighborhood of 300,000 cycles, the torque of the embodiment of the present invention was approximately three times higher than that of the prior art.

It is clear from Figs. 7 and 8 that, when the radial road and the swing load are applied, the vibration-proof effect of the rod end bearing according to the embodiment of the present invention is much higher than that of the prior art in the range of larger cycles.

As apparent from the above-mentioned statement, with the embodiment of the present invention, an excellent vibration-proof effect can be attained not only when the radial load is applied and but also when both the radial load and the swing load is applied.

It is preferred that the thickness of the vibration-proof member according to the present invention be 5% to 10% of the diameter of the ball and the width of the vibration-proof member be 40 % to 60% of the diameter of the ball.

A second embodiment as shown in Figs. 9 and 10 discloses a spherical bearing which is the one with the sleeve 8 removed from the spherical bearing of the first embodiment and can be used when a vibration-proof member 5 is formed between the body 1 and the race 11 without accompanying generation of high temperature heat.

The end portion 2 of the body 1, the mounting hole 3 in the end portion 2, the inner wall 4 of the mounting hole 3, the inner and outer peripheries 7 and 6 of the vibration-proof member 5, the inner and outer peripheries 13 and 12 of the race 11, the anti-wear liner 14, the bald 15, the outer peripheral surface 16 of the ball 15, the connecting center hole 17 and the seals 18, all being used in the second embodiment, are formed identical with those of the first embodiment.

Moreover, when the anti-wear liner 14 is not required, the same material as that used for the vibration-proof member 5 of the first embodiment can be used for the vibration-proof member 5, and the second embodiment attains the same vibration-proof effect as and has the similar long operation life to the first embodiment.

## Claims

1. A spherical slide bearing comprising a body (1), a race (11) fitted in a mounting hole (3) of said body (1), and a ball (15) fitted rotatably and slidably into the partially spherical inner peripheral surface (13) of said race (11), characterized in that a substantially ring-shaped vibration-proof member (5) made of vibration-proof rubber is provided between the inner peripheral wall (4) of said mounting hole (3) of said body (1) and the outer peripheral surface (12) of said race (11).

2. The spherical slide bearing according to claim 1, characterized in that said vibration-proof member (5) is made of vibration-proof rubber of hydrogenated NBR series.

3. The spherical slide bearing according to claim 1 or claim 2, characterized in that the thickness of said vibration-proof member (5) is 5% to 10% of the diameter of said ball (15), and in that the width of said vibration-proof member (5) is 40% to 60% of the diameter of said ball (15).

4. The spherical slide bearing according to any one of claims 1 to 3, characterized in that a substantially annular sleeve (8) is provided between the inner peripheral surface (7) of said vibration-proof member (5) and the outer peripheral surface (12) of said race (8).

5. The spherical slide bearing according to any one of claims 1 to 4, characterized in that a liner (14), which is made of an anti-wear material is formed on the inner peripheral surface (13) of said race (11) so as to be slidable on the outer peripheral surface (16)of said ball (15).
